(19) Europäisches Patentamt

European Patent Office

Office européen des brevets

(11) **EP 1 553 779 A1**

(12) **EUROPEAN PATENT APPLICATION**

(43) Date of publication:
**13.07.2005 Bulletin 2005/28**

(51) Int Cl.[7]: **H04N 7/26**, H04N 5/00,
H04N 5/783

(21) Application number: **04090007.8**

(22) Date of filing: **12.01.2004**

| | |
|---|---|
| (84) Designated Contracting States:<br>**AT BE BG CH CY CZ DE DK EE ES FI FR GB GR**<br>**HU IE IT LI LU MC NL PT RO SE SI SK TR**<br>Designated Extension States:<br>**AL LT LV MK** | (72) Inventors:<br> • **Hütter, Ingo**<br>  **30982 Pattensen (DE)**<br> • **Adolph, Dirk**<br>  **30952 Ronnenberg (DE)** |
| (71) Applicant: **Deutsche Thomson-Brandt GmbH**<br>**78048 Villingen-Schwenningen (DE)** | (74) Representative: **Rittner, Karsten, Dr. et al**<br>**Deutsche Thomson-Brandt GmbH,**<br>**Karl-Wiechert-Allee 74**<br>**30625 Hannover (DE)** |

(54) **Data reduction of video streams by selection of frames and partial deletion of transform coefficients**

(57)     A method for generating an MPEG encoded video data stream for trick mode, e.g. fast forward, with reduced data rate comprises defining a data reduction rate, selecting frames from an existing first video data stream, defining which frequency coefficients ($C_T$) of the sub-blocks (SB) are to utilize, selecting for the sub-blocks (SB) of the selected frames the defined frequency coefficients ($C_T$), wherein a frequency coefficient following an ignored non-zero frequency coefficient ($C_{EX}$) is re-encoded using run-length code, arranging the defined frequency coefficients ($C_T$) sequentially according to the MPEG standard, and generating a video data stream with reduced data rate as a sequence of the defined frequency coefficients ($C_T$) of the selected data blocks (I,P), wherein the order in which the frequency coefficients ($C_T$) are arranged remains unchanged.

*Fig.11a*

EP 1 553 779 A1

**Description**

This invention relates to a method and apparatus for generating from a first data stream a second data stream with reduced data rate. In particular, the invention relates to encoding video data for trick mode with reduced data rate.

Different home network architectures have been developed or are still under development to enable every user a full access to his audio-visual (AV) content available on his home network. Home Audio/Video (HAVi) on IEEE1394 networks or Universal-Plug-And-Play (UpnP) on Internet Protocol (IP) networks are very popular examples.

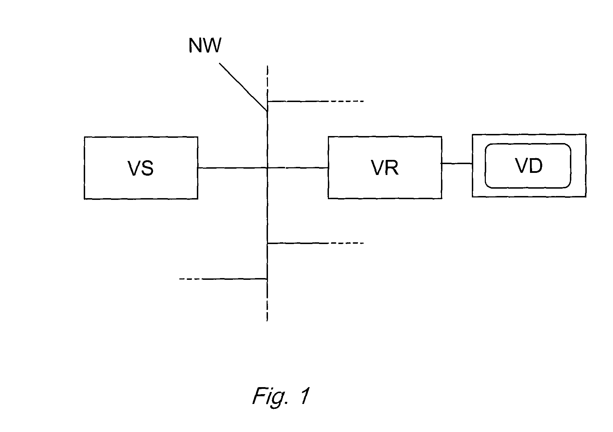

The playback of AV content always requires a connection between a server device and a decoding and presenting renderer device, which are connected to each other, e.g. via a home network. Fig.1 shows a video file server VS and a video renderer VR connected through a network NW. The renderer VR in turn is connected to a video display VD, e.g. in a TV set. The video display VD however could be a separate device that is connected via the network NW. Specific problems arise when trick modes are requested for playback, e.g. if fast forward trick mode shall be viewed on a display VD and the data are coming from a server VS being e.g. a hard-disk drive (HDD) based recorder or a DVD player, and the connection NW between them is bandwidth limited.

A simple solution for the fast forward trick mode is the transfer of the data stream by a much higher bitrate to the renderer device, and letting the renderer device downsample the time scale. This solution, however, results in a much higher network load. If e.g. a 12x fast forward mode is requested, meaning that only every 12$^{th}$ frame is rendered and displayed, then the data rate is increased from e.g. 5 Mbit/sec to 60 Mbit/sec for a video stream. This may overload bandwidth capacity of the home networks, because even when the requested high bitrate is available and can be handled in theory, it may result in the disturbance of other simultaneously running data transfers within the network by data leakage or delays. Further, if the network contains wireless links, these links typically have very limited bandwidth available, so that a fast forward trick mode video data stream may not pass.

Another possible solution is to do the downsampling of the time scale on the server side. E.g. in the case of MPEG, a video format being standardized in ISO/IEC 13818-2, this can be done by subsampling data for only the I-frames since they are intracoded, i.e. can be decoded independently from other frames. But as shown in the following, also this solution results in a disadvantageously high bitrate.

The problem to be solved by the present invention is to describe a video trick mode with a bitrate that may be close or equal to the original bitrate of the stream as it is without trick mode.

Within this disclosure, additional processes are unveiled to adopt the data stream, thus providing an advanced type of fast forward trick mode with a bitrate that may be close or equal to the original bitrate of the stream without trick mode. In principle, the inventive method is also suitable for generating a video trick mode data stream with a bitrate even below the bitrate of the original data stream, but in most applications this is not required.

To substantially keep the original bitrate of an MPEG encoded video data stream during a video trick mode application, the inventive method contains different processing steps, as described in the following.

In a first processing step, the original data stream is temporally subsampled, thus reducing the number and size of the frames to transmit by selecting only specific frames. In a second processing step, repartitioning the discrete frame data can further reduce the bitrate. In particular, the second processing step comprises reduction of the number of DCT coefficients to be transmitted, and their re-encoding if required.

These processing steps are executed on the video server side and lead to an encoded trick mode video data stream that can be transmitted e.g. over the network. It is particularly advantageous that the format of this trick mode video data stream strictly complies with the MPEG standard, i.e. it can be decoded like any other MPEG video data stream. E.g. the order of utilized DCT coefficients remains unchanged. Thus, no special decoder is required. As a further advantage, the trick mode video data stream can be generated on the fly, i.e. it can be decoded and viewed while it is generated, and therefore needs no intermediate storage. The reduction rate can also be modified on the fly, as shown below, and therefore it is possible e.g. to adopt the reduction rate to the currently available bandwidth capacity.

To reduce the bitrate during trick modes, a repartitioning of the data stream is performed at the server side by sending only selected frames, e.g. selected I-frames and/or P-frames. P-frames are frames that can be predicted from I-frames, using e.g. motion compensation. But as already mentioned, this repartitioning will not be sufficient. The general idea of the invention is to reduce the bitrate by applying additional processing steps to the transmitted discrete frames. These processing steps further reduce the bit amount of every individual frame by cutting off specific, usually higher order DCT coefficients of macro blocks. Therefore, the additional processing steps applied to the discrete frames reduce also the video picture quality, but still the reduced video picture quality is absolutely acceptable for the user, since due to the reduced human viewing sensibility against picture artifacts during fast forward or fast backward, known as rapid movement masking effect, the cutting off of higher DCT coefficients in a frame lowers bitrate by acceptable picture quality.

Advantageous embodiments of the invention are disclosed in the dependent claims, the following description and the figures, which show in

Fig.1 a video data server and a rendering device, connected by a network;
Fig.2 the structure of a group of pictures (GOP) according to the MPEG standard;
Fig.3 a reduced MPEG coded group of pictures containing only I- and P-frames;
Fig.4 a reduced MPEG coded group of pictures containing only I-frames;
Fig.5 a sequence of I-frames;
Fig.6 a sequence of every 2nd I-frames;
Fig.7 the position of DCT coefficients in an 8x8 macro block according to MPEG-2;
Fig.8 the zigzag scanning scheme used for sequential transmission of DCT coefficients;
Fig.9 an exemplary matrix of DCT coefficients and their sequential arrangement;
Fig.10a a first example for selecting run-length coded DCT coefficients;
Fig.10b the resulting sequence of DCT coefficients;
Fig.11a a second example for selecting run-length coded DCT coefficients from a matrix;
Fig.11b a second example for selecting run-length coded DCT coefficients in sequential order;
Fig.11c the resulting sequence of DCT coefficients;
Fig.11d the resulting sequence of DCT coefficients after re-encoding;
Fig.12a a third example for selecting run-length coded DCT coefficients in sequential order; and
Fig.12b the resulting sequence of DCT coefficients.

In the following, the methods for reducing the data rate are described for MPEG-2 video streams. Similar methods can be applied to similar coding methods. An MPEG-2 video stream consists of I-frames, P-frames and B-frames. While I-frames are intracoded, i.e. can be independently decoded, P-frames are predicted only from preceding I-frames and B-frames are interpolated from preceding and subsequent I-and P-frames, using e.g. motion compensation.

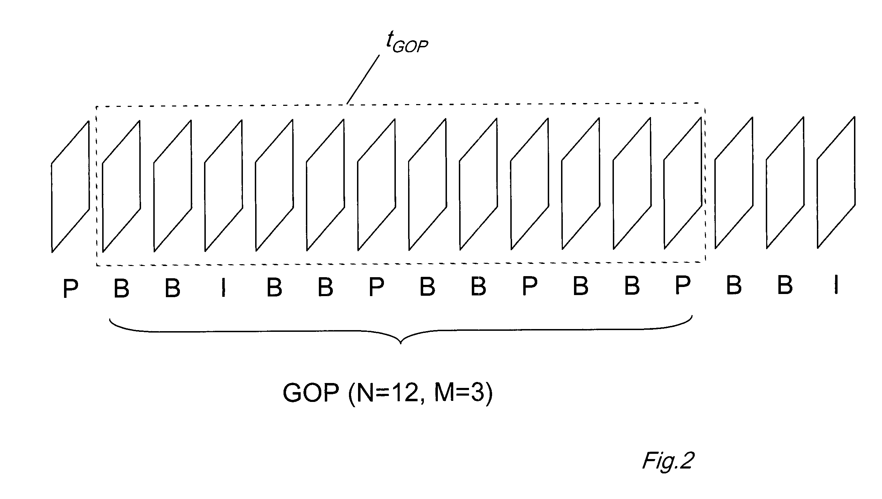

One I-frame and several P-frames and B-frames are grouped together to a "Group Of Pictures" (GOP). These GOPs are parameterized by a pair of (M,N) values. While N represents the count of frames in every GOP, M is the number of frames between two anchor frames. Anchor frames are I-frames and P-frames only, so that each M-th frame is an I-frame or a P-frame. Typical parameters used are (N,M) = (12,3). In that case the coding sequence of frames in a GOP is IBBPBBPBBPBB , which corresponds to the displayed sequence of frames shown in Fig.2. Within the 12 frames of the GOP, always after two B-frames comes an I-frame or P-frame, so that every 3rd frame is an anchor frame.

Coding I-, P- and B-frames requires different amounts of data. Let "i" represent the mean value of the amount of data needed for the MPEG encoded I-frame, let "p" represent the mean value of the amount of data needed for the MPEG encoded P-frame, and "b" represent the mean value of the amount of data needed for the MPEG encoded B-frame. Then the relation between the mean values of "i", "p" and "b" can be expressed by the following equations, explaining "p" and "b" as a fraction of "i":

$$p = \alpha \cdot i$$
$$b = \beta \cdot i \qquad\qquad \text{(Eq.1)}$$

Typical values are $\alpha$=0.4 and $\beta$=0.2. So the mean amount of data per frame for a standard MPEG-2 sequence, played back with normal speed or "1x", can be calculated as:

$$r(1x) = \frac{i + p \cdot (\frac{N}{M} - 1) + b \cdot (N - \frac{N}{M})}{N}$$

$$r(1x) = \frac{1 + \alpha \cdot (\frac{N}{M} - 1) + \beta \cdot (N - \frac{N}{M})}{N} \cdot i \qquad \text{(Eq.2)}$$

And with the typical values N=12, M=3, $\alpha$=0.4 and $\beta$=0.2:

$$r(1x) = \frac{1+0.4\cdot3+0.2\cdot8}{12} \cdot i = 0.31\overline{6} \cdot i \qquad \text{(Eq.3)}$$

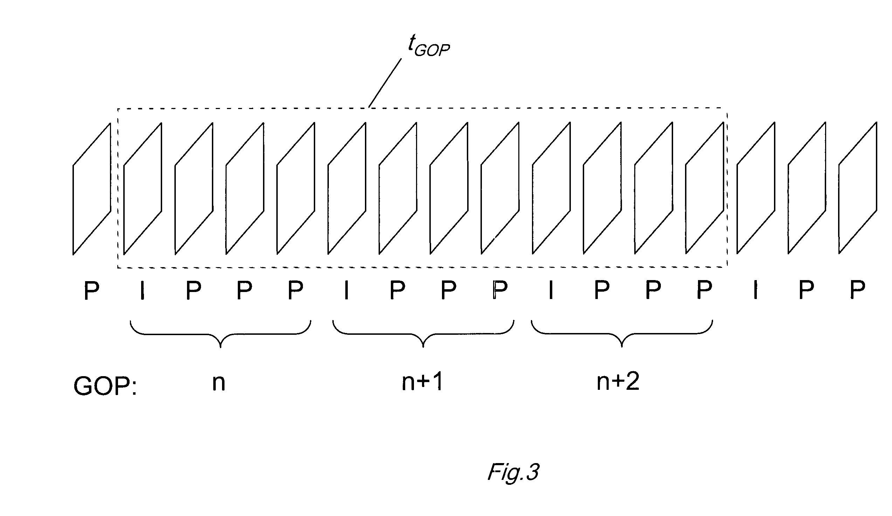

If a trick mode is chosen where all B-frames are discarded and only the anchor frames, i.e. the I- and P-frames, are transmitted as shown in Fig.3, the rate can be calculated as:

$$r(Mx) = \frac{(i+p\cdot(\frac{N}{M}-1))\cdot M}{N}$$

$$r(Mx) = \frac{(1+\alpha\cdot(\frac{N}{M}-1))\cdot M}{N} \cdot i \qquad \text{(Eq.4)}$$

And with the typical values:

$$r(Mx) = \frac{(1+0.4\cdot3)\cdot3}{12} \cdot i = 0.55 \cdot i \qquad \text{(Eq.5)}$$

This shows that a bitrate is nearly doubled for that case.

If an 'I-frame only' trick mode is chosen with an n-fold speed (nx, with n ≤ N), the bitrate will increase even more. For 'I-frame only' trick mode, n different I-frames are transmitted during a GOP time period. These are displayed by repeating the I-frames N/n times by preserving the N frames of a GOP and providing equidistant picture subsampling in time for the viewer.

Two examples for N=12 follow.

First, in the case of 2x 'I-frame only' trick mode, there are n=2 I-frames from different GOPs transmitted to the renderer, which are then displayed for N/n=6 frame periods each, making a total of N=12 frame periods.

Second, in the case of 3x 'I-frame only' trick mode, there are n=3 I-frames from different GOPs transmitted to the renderer, which are then displayed for N/n=4 frame periods.

The mean amount of data for the 'I-frame only' trick mode is calculated by:

$$r(nx) = \frac{n}{N} \cdot i \qquad \text{(Eq.6)}$$

For 6x and for 10x fast forward the typical values are:

$$r(6x) = \frac{6}{12} \cdot i = 0.5 \cdot i \qquad \text{(Eq.7)}$$

$$r(10x) = \tfrac{10}{12} \cdot i = 0.83\overline{3} \qquad (\mathrm{Eq.8})$$

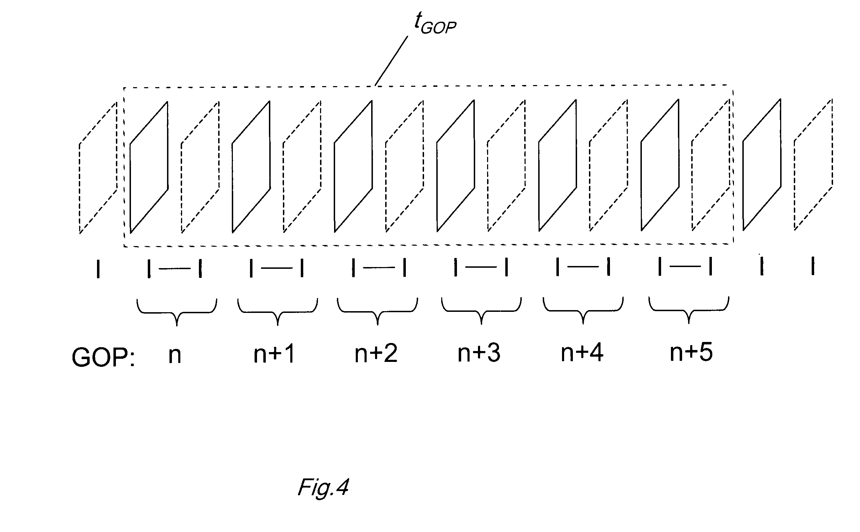

The 6x case is shown in Fig.4. Six I-frames, belonging to six GOPs n,...,n+5 are displayed during the time of a single GOP $t_{GOP}$. Generally, for n < N the transmitted I-frames are repeated and displayed N/n times each.

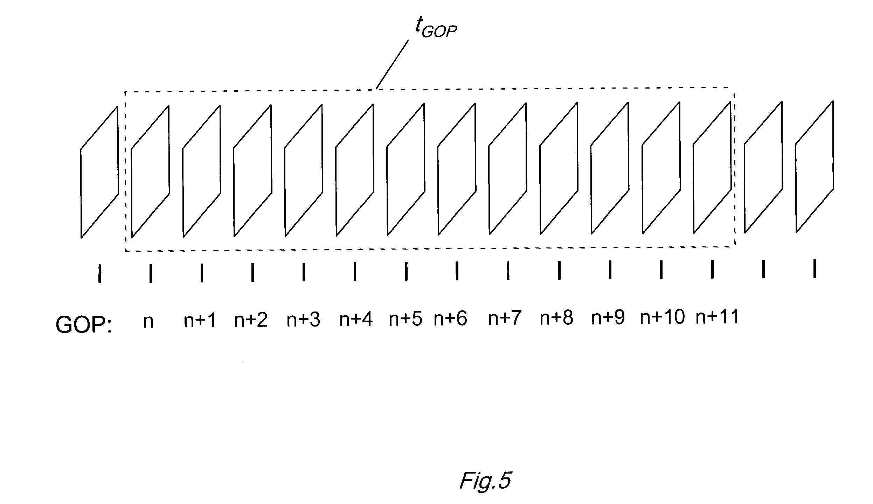

If a speed is chosen with n = N, as shown in Fig.5, the maximum bitrate is reached, because n I-frames are rendered within the time for N frames, i.e. every frame is displayed for the normal frame display time duration. It cannot be displayed for a shorter duration. Therefore, for n ≥ N, the number of I-frames transmitted keeps constant, while only the GOPs where the I-frames are selected from are varied.

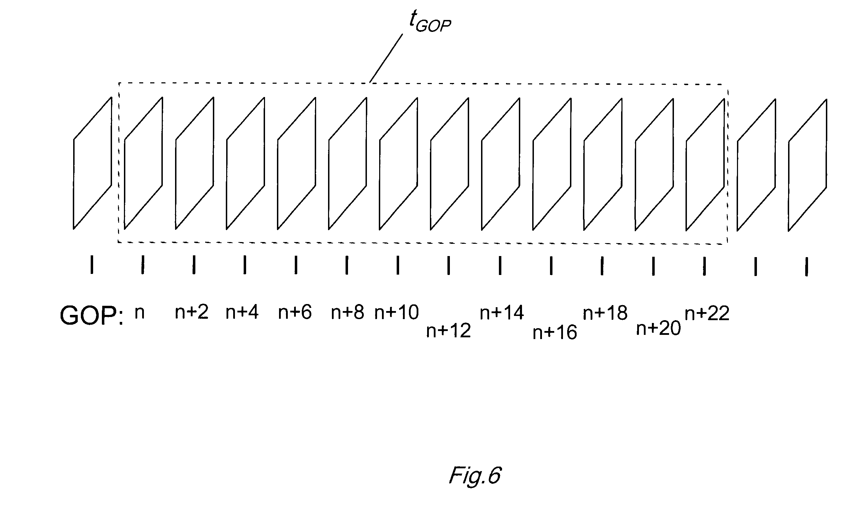

This is depicted in Fig.6 for n=24, N=12 and 24x 'I-frame only' trick mode. Only the I-frame of every 2nd GOP n,n+2,...,n+22 out of 24 GOPs is selected for transmission. Nevertheless, in all cases n > N the bitrate always is

$$r(nx) \leq \tfrac{N}{N} \cdot i = i \qquad (\mathrm{Eq.9})$$

which is more than 3 times higher than during standard playback (1x) for (N,M)=(12,3), see Eq.3.

One solution for reducing the data rate is to introduce pauses during the transmission, by skipping frames, thus reducing temporal resolution. So e.g. for a 12x fast forward speed there could be used the first I-frame of every 2nd GOP and be displayed twice, instead of using the first I-frame of every GOP from the original stream. In that case the bitrate would be reduced by one half, as compared to transmitting the I-frames of all GOPs. But this solution has large sampling time distances, i.e. the subsampling in time shows only one frame out of a time of one second of pictures, corresponding to two GOPs, from the original sequence. It will be very difficult for a viewer to recognize anything from the pictures.

All the mentioned processing methods for providing trick modes are based on processing a full standard MPEG video data stream. They do not have a large impact to the stream preparation before the data stream is transmitted to a decoder, e.g. via a home network. The processing steps to be executed for the subsampling of frames in time comprise parsing MPEG start codes not deeper than to the picture layer. When detecting a picture header of the adequate picture type, which is I- or P-frame, the picture is extracted and transmitted by re-stamping its presentation time stamps (PTS) within the MPEG system layer accordingly.

As seen above, the reduction of the bitrate for trick modes can be achieved by expanding the sampling time periods, so that there are less I-frames transferred, which are then displayed by the renderer for a longer time, namely until the next I-frame is received. This method however results in a degradation of picture quality concerning its resolution in time.

This invention aims at a further advantageous reduction of the bitrate, without necessarily expanding the sampling time period. According to the invention, this is achieved by further advanced processing steps that manipulate video stream layers deeper than the picture layer. By reducing the amount of bits needed for a single I-frame, it becomes possible to transfer more I-frames without going beyond the scope of network capacity, and thus reaching a higher resolution in time for the trick modes. Particularly, it is even possible to adjust the transmitted datarate to currently available circumstances, e.g. transmission capabilities.

For the inventive advanced processing method applicable e.g. for trick modes, the available MPEG stream is parsed till reaching the macro block layer. This needs not to be done for all frames, but only for those frames that are subsequently being transferred, e.g. every 2nd I-frame.

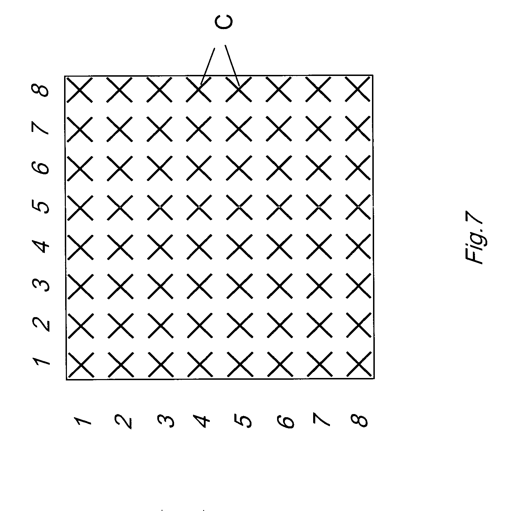

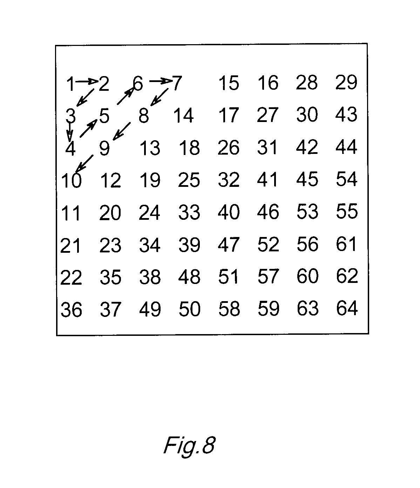

According to the mentioned MPEG video standard, a macro block consists of single sub-blocks with 8 by 8 pixels each, describing luminance or chrominance information. These sub-blocks of the time domain are transformed by a Discrete Cosine Transform (DCT) into 64 DCT coefficients in the frequency domain, which are usually also depicted as a matrix of 8 by 8 values. Such sub-block, or DCT coefficient matrix respectively, is depicted in Fig.7. Each cross represents a DCT coefficient C. For entropy encoding after quantization, the coefficients within the sub-blocks are zigzag scanned, as depicted in Fig.8, wherein coefficients that are zero are skipped, and the number of skipped coefficients, which is also called run-length, is combined with the following value and encoded together by a variable length coding (VLC). A VLC code word contains a DCT coefficient value and the number of positions in the matrix that are skipped when executing the zigzag scan. In known systems these coefficients are skipped because their respective coefficients are zero.

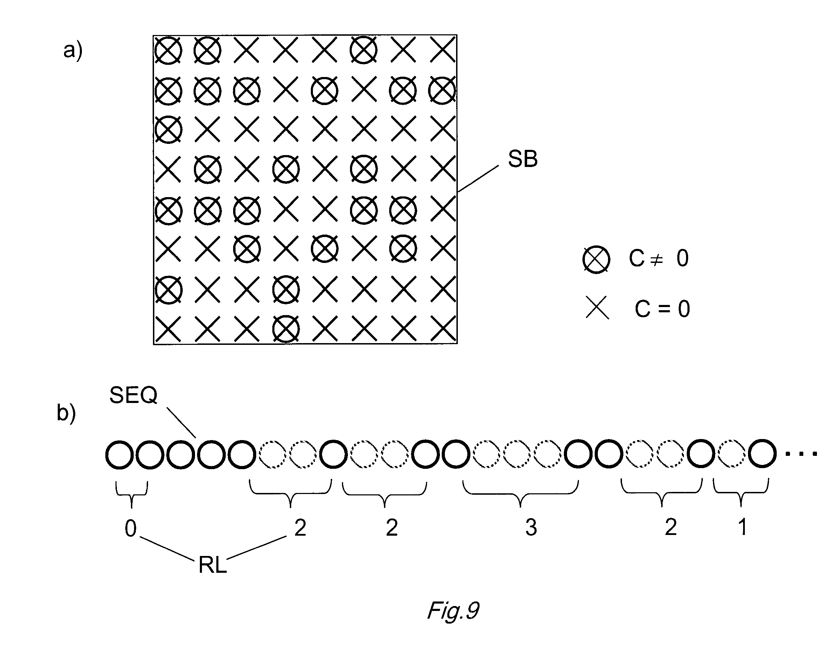

Fig.9a shows an exemplary sub-block SB with coefficients, wherein some coefficients are zero and some are non-zero.
Fig.9b shows, in slightly different notation, the corresponding sequence SEQ of non-zero coefficients that results when the zigzag scan shown in Fig.8 is executed on the sub-block SB. The run-length RL, i.e. the number of skipped coefficients, is then coded into each VLC coded value, as defined by the above-mentioned MPEG standard.

The inventive advanced processing steps are executed on the quantized and zigzag scanned sub-block information. The zigzag-scanning scheme is kept in order to enable standard MPEG decoding. The invention is based on the idea to cut off some part of the quantized DCT coefficients. This can be done by different criteria, leading to different optimization methods. The result is always data reduction within the single frames.

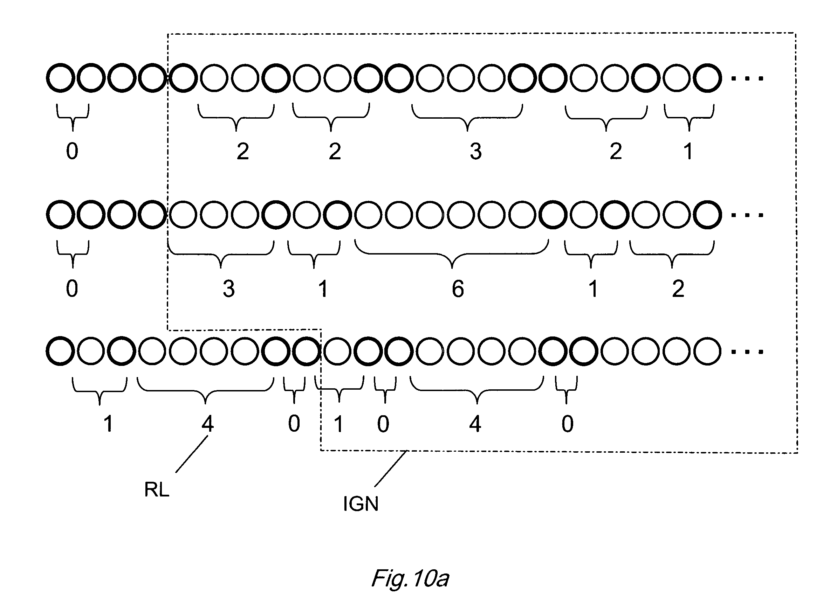

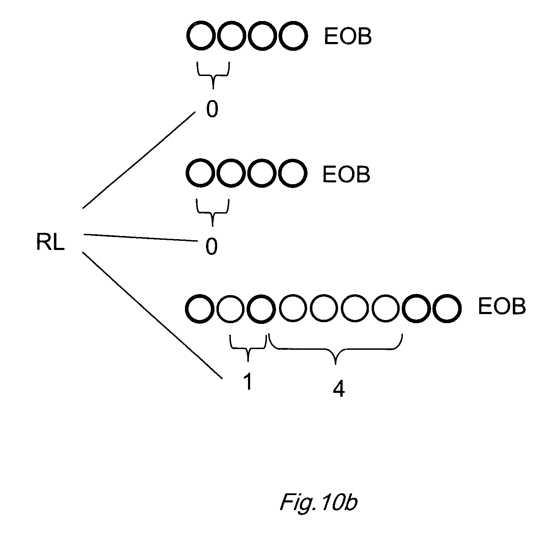

In one embodiment of the invention, a first optimization method is utilized, as shown in Fig.10a and Fig.10b. It is based on ignoring, i.e. cutting off, all quantized DCT coefficients after having parsed a defined number of VLC code words. After e.g. 4 VLC code words an end-of-block (EOB) flag is inserted, as shown in Fig.10b, and the rest of the coefficients IGN of the current sub-block is skipped. These e.g. 4 VLC code words correspond to the first 4 non-zero coefficients according to the zigzag scan described above. Then the next sub-block is processed. As mentioned above, the result of this processing is a standard MPEG coded sub-block with reduced number of coefficients, and therefore reduced amount of data. It is possible to decode the sub-block again using standard MPEG procedures, though the resulting block of pixels has reduced spatial resolution. During fast forward trick mode, however, a user cannot recognize this. It is characteristic for this optimization method that the spatial resolution of the resulting sub-blocks, and therefore the pictures, is variable, while the data rate is almost constant for a given number of transmitted coefficients. As further mentioned above, the number of used VLC code words can be determined for every sub-block independently, and further for luminance and chrominance independently, thus individually changing the spatial resolution of subsequently transmitted sub-blocks and simultaneously changing the data rate, e.g. according to current bandwidth requirements or capabilities.

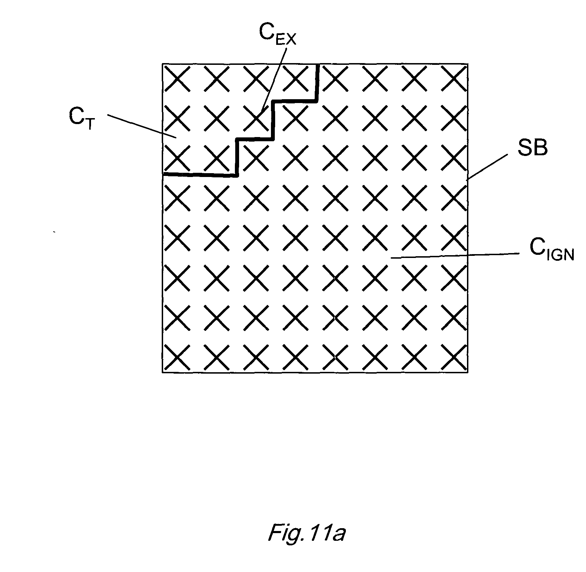

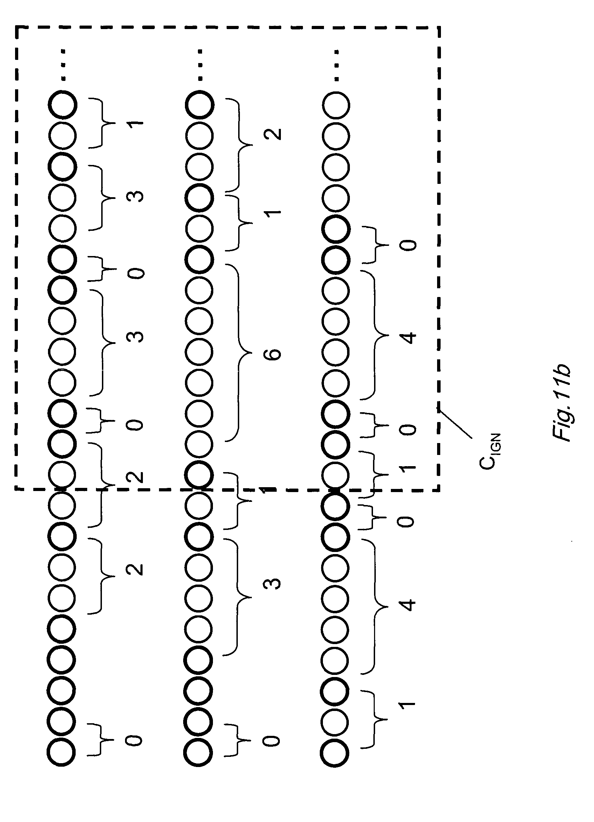

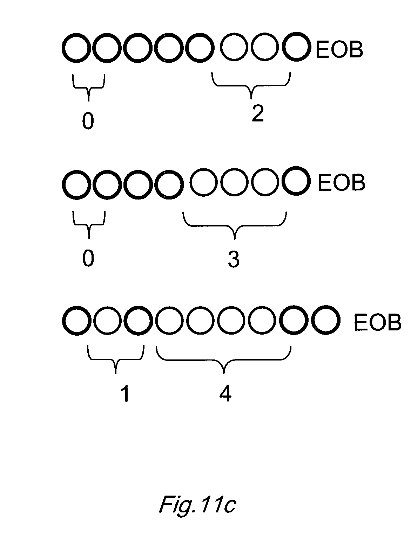

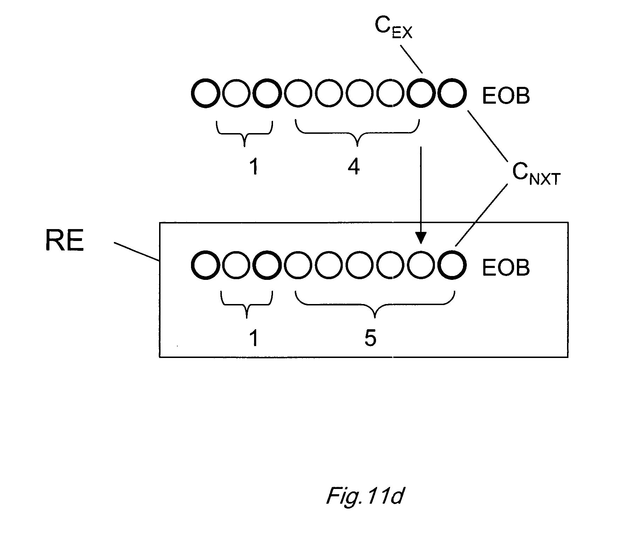

In another embodiment of the invention, a second optimization method is utilized, as shown in Fig.11 a-d. It is based on cutting off all quantized DCT coefficients after having reached a defined vertical and/or horizontal resolution in the frequency pattern. Vertical resolution is given by the row number of a coefficient within the matrix, and horizontal resolution is given by the column number of a coefficient within the matrix. The minimum resolution corresponds to the upper left coefficient, which represents the DC value of the luminance or chrominance of the sub-block. This optimization method can be understood such that the first k positions $C_T$ of the sub-block SB, according to the zigzag scheme, are scanned through. As usual for MPEG, only the non-zero coefficients are transmitted. The other positions $C_{ICN}$ of the sub-block SB are ignored. Therefore the number of transmitted coefficients per sub-block may vary, depending on the coefficients being zero or not.

In Fig.11a a range of nine coefficients $C_T$ is defined within a sub-block that are scanned through according to the zigzag scheme, while the other coefficients $C_{ICN}$ are ignored. This can be noted as a run-length pattern "1-2-3-4-5-6-7-8-9". Fig.11b shows the resulting sequence for three exemplary sub-blocks with different distributions of zero coefficients. For the first example, 6 out of the first 9 coefficients are non-zero. For the second example, 5 out of the first 9 coefficients are non-zero. For the third example, 4 out of the first 9 coefficients are non-zero. The respective sequences of coefficients used for VLC coding and transmission are shown in Fig.11c.

This coding method results in a picture with a limited spatial resolution, but a more variable data rate. A viewer will perceive the limited spatial resolution as a constant spatial resolution within a frame.

In a similar embodiment, a pattern of coefficients to be scanned is defined, so that not the common zigzag-scanning scheme is employed, but certain positions are excluded. E.g. the normal zigzag-scanning scheme can be employed with one position $C_{EX}$ being ignored. Also more than one position can be excluded. Thus, also specified non-zero DCT coefficients can be skipped. In this case, the inventive method comprises re-encoding the run-length for the next value, as described below. The coefficients $C_{EX}$ to be skipped can be specified by their position, e.g. "column 3, line 2", or they can be specified by their value, e.g. "ignore all coefficients with values below 5% of their possible maximum value", or they can be specified by a combination of both, e.g. "ignore among the first 12 coefficients of the zig-zag scan the 8th and 9th coefficient and all those coefficients which have a value of 10 or below".

Since this embodiment comprises skipping of coefficients, it requires re-encoding of the next non-zero coefficient. An example that corresponds to the third example from Fig.11c is shown in Fig.11d. It is assumed that the above-described range $C_T$ of coefficients, as shown in Fig.11a, is scanned using the standard zigzag-scanning scheme, and that one position $C_{EX}$ is excluded. Then this position is set to zero, and therefore the next following non-zero coefficient $C_{NXT}$ has another number of leading zero coefficients. It must therefore be differently VLC coded. In the example shown in Fig.11d, the run-length to be encoded is 5 instead of 4. In an analogous manner it is easy to skip more than one coefficient.

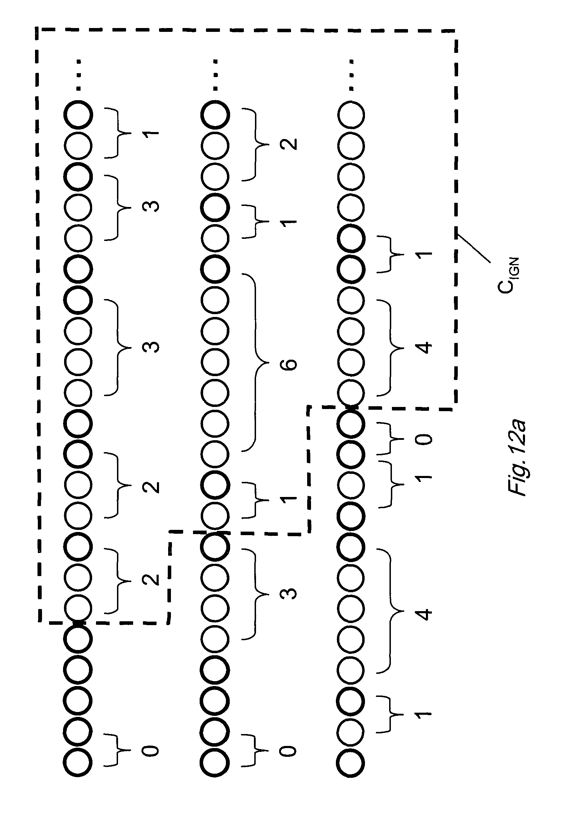

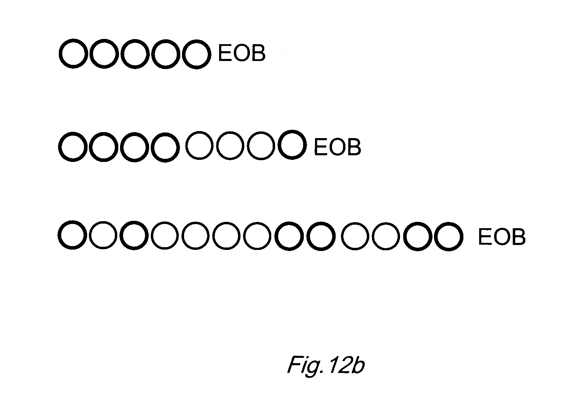

In yet another embodiment of the invention, a third optimization method is utilized, as shown in Fig.12a-b. It is based on cutting off all quantized DCT coefficients after, or immediately before, having reached a defined amount of bits per sub-block. When cutting off straight before having reached a defined amount of bits per sub-block, it is possible to define a strict limit to the amount of data, but the required processing is slightly more complicated. This optimization method actually results in limiting the number of bits to a certain range, and thus comprises the limiting to a maximum value, since VLC coded coefficients have a maximum number of bits. The number of bits per coefficient depends on its amplitude value and the run-length value, i.e. the number of preceding zero coefficients. Therefore, the number of transmitted coefficients depends on both the number of non-zero coefficients and the number of skipped zero coefficients.

For all embodiments of the present invention, the bit amount can be defined separately for luminance and chrominance. Typically, a higher amount is chosen for the luminance sub-blocks because human visual perception is less sensitive for color artifacts within rapid motions.

Further, it is also possible to combine the above-described skipping of one or more coefficients and re-encoding, with respect to run-length, the next used coefficient with any of the optimization methods described above.

Advantageously, with the inventive method the datarate during trick modes remains nearly constant, as cpmpared to normal video data rate. This is particularly useful if the connection between a server and a renderer contains links with strictly limited bandwidth, e.g. wireless links.

The described method for generating a fast forward video trick mode can analogously be utilized for generating data streams for any video trick mode with reduced temporal and/or spatial resolution, e.g. fast backward.

The invention can be used in any type of devices that read a standard video data stream and generate a trick mode video data stream, e.g. digital video recorders, so-called personal video recorders (PVR), laser disc players for video applications such as DVD players, video encoding units for video-on-demand (VOD) or the like.

**Claims**

1. Method for generating from a first data stream a second data stream with reduced data rate, the first data stream comprising encoded data blocks (I,P,B), wherein first data blocks (I) are intracoded and second data blocks (P,B) are coded based on using redundancy between said first data blocks and said second data blocks, and the encoded data blocks are split into data segments (SB), the data segments are transformed from the time domain into the frequency domain and the resulting frequency coefficients ($C_T$, $C_{ICN}$) are, depending on their value, either ignored or run-length encoded and sequentially arranged in a predefined order, **characterized in** the steps of

   - defining the data reduction rate;
   - selecting data blocks (I,P) from said first and/or second data blocks, based on the defined data reduction rate;
   - defining which frequency coefficients of the data segments (SB) are utilized ($C_T$) for generating the second data stream and which are ignored ($C_{ICN}$, $C_{EX}$), wherein also the defined data reduction rate is considered;
   - selecting for the data segments (SB) of the selected data blocks (I,P) the defined frequency coefficients ($C_T$), wherein a frequency coefficient following an ignored non-zero frequency coefficient ($C_{EX}$) is re-encoded using run-length code, arranging the defined frequency coefficients ($C_T$) sequentially and appending data (EOB) indicating the end of the data segment (SB); and
   - generating the second data stream as a sequence of the defined frequency coefficients ($C_T$) of the selected data blocks (I,P), wherein the order in which the frequency coefficients ($C_T$) are arranged remains unchanged.

2. Method according to claim 1, wherein the data reduction rate is defined dynamically for individual data segments (SB), data blocks (I,P) or groups thereof.

3. Method according to any of claims 1-2, wherein the definition of which frequency coefficients of the data segments (SB) are utilized ($C_T$) for generating the second data stream and which are ignored ($C_{IGN}$, $C_{EX}$) comprises specifying for a data segment (SB) a maximum number of utilized frequency coefficients ($C_T$), and/or specifying a minimum non-zero value that a utilized coefficient ($C_T$) must have, and/or specifying a maximum number or range of bits that the utilized frequency coefficients ($C_T$) may have.

4. Method according to any of claims 1-3, wherein said selecting of data blocks comprises selecting only said first, intracoded data blocks (I), thereby implementing a trick mode.

5. Method according to any of claims 1-4, wherein the first and second data stream are video data streams, the first and second data blocks are video frames, and the data segments (SB) are sub-blocks of pixels in the time domain, or corresponding Discrete Cosine Transform coefficients ($C_T$, $C_{IGN}$) respectively in the frequency domain.

6. Method according to claim 5, wherein the first and second video data stream complies with the MPEG video standard.

**7.** Method according to claim 5 or 6, wherein said definition of the data reduction rate, and/or said definition of which frequency coefficients are utilized ($C_T$) for generating the second data stream, is done separately for luminance and chrominance components of video data.

**8.** An apparatus for encoding a first data stream into a second data stream with reduced data rate, the first data stream comprising encoded data blocks (I,P,B), wherein first data blocks (I) are intracoded and second data blocks (P,B) are coded based on using redundancy between said first data blocks and said second data blocks, and the encoded data blocks are split into data segments (SB), the data segments are transformed from the time domain into the frequency domain and the resulting frequency coefficients ($C_T$,$C_{IGN}$) are, depending on their value, either ignored or run-length encoded and sequentially arranged in a predefined order, **characterized in** comprising

-   means for defining the data reduction rate;
-   means for selecting data blocks (I,P) from said first and/or second data blocks, based on the defined data reduction rate;
-   means for defining which frequency coefficients of the data segments (SB) are utilized ($C_T$) for generating the second data stream and which are ignored($C_{IGN}$,$C_{EX}$), wherein also the defined data reduction rate is considered;
-   means for selecting for the data segments (SB) of the selected data blocks (I,P) the defined frequency coefficients ($C_T$), wherein a frequency coefficient following an ignored non-zero frequency coefficient ($C_{EX}$) is re-encoded using run-length code, arranging the defined frequency coefficients ($C_T$) sequentially and appending data (EOB) indicating the end of the data segment (SB); and
-   means for generating the second data stream as a sequence of the defined frequency coefficients ($C_T$) of the selected data blocks (I,P), wherein the order in which the frequency coefficients ($C_T$) are arranged remains unchanged.

**9.** Apparatus according to claim 8, wherein the data reduction rate is defined dynamically for individual data segments (SB), data blocks (I,P) or groups thereof.

**10.** Apparatus according to claim 8 or 9, wherein said means for defining the data reduction rate, and/or said means for defining which frequency coefficients are utilized ($C_T$) for generating the second data stream, comprise means for separate processing of luminance and chrominance components of video data.

Fig. 1

Fig.2

GOP (N=12, M=3)

$t_{GOP}$

P B B I B B P B B P B B P B B I

$t_{GOP}$

P I P P P I P P P I P P P I P P

GOP:  n  n+1  n+2

*Fig.3*

Fig.4

$t_{GOP}$

GOP: n    n+1  n+2  n+3  n+4  n+5  n+6  n+7  n+8  n+9  n+10  n+11

Fig.5

EP 1 553 779 A1

$t_{GOP}$

GOP: n    n+2   n+4   n+6   n+8  n+10       n+14        n+18      n+22
                                     n+12        n+16       n+20

*Fig.6*

Fig.7

Fig.8

Fig.9

Fig.10a

RL

OOOO EOB

0

OOOO EOB

0

OOOOOOOOO EOB

1    4

*Fig.10b*

$C_{EX}$

$C_T$

SB

$C_{IGN}$

*Fig.11a*

Fig. 11b

Fig.11c

EP 1 553 779 A1

*Fig.11d*

EP 1 553 779 A1

Fig. 12a

OOOOO EOB

OOOO OOOO EOB

OOOOOOOOO OOOO EOB

*Fig. 12b*

EP 1 553 779 A1

**European Patent Office**

# EUROPEAN SEARCH REPORT

Application Number

EP 04 09 0007

## DOCUMENTS CONSIDERED TO BE RELEVANT

| Category | Citation of document with indication, where appropriate, of relevant passages | Relevant to claim | CLASSIFICATION OF THE APPLICATION (Int.Cl.7) |
|---|---|---|---|
| X | US 5 717 816 A (BOYCE JILL MACDONALD ET AL) 10 February 1998 (1998-02-10) | 1-6,8,9 | H04N7/26 H04N5/00 |
| Y | * abstract * <br> * column 1, line 50 - line 55 * <br> * column 3, line 62 - line 67 * <br> * column 4, line 12 - line 21 * <br> * column 8, line 33 - line 50 * <br> * column 12, line 12 - column 13, line 31 * <br> * column 14, line 33 - line 58 * <br> * figures 1A,2A,2B,2C * <br> ----- | 7,10 | H04N5/783 |
| Y | WO 98/17065 A (QUALCOMM INC) 23 April 1998 (1998-04-23) <br> * page 14, line 3 - line 5 * <br> * page 15, lines 2,3 * <br> * figures 5A-5C * <br> ----- | 7,10 | |
| X | EP 0 944 261 A (MATSUSHITA ELECTRIC IND CO LTD) 22 September 1999 (1999-09-22) | 1,3-6,8 | |
| A | * paragraph [0022] * <br> * paragraph [0024] * <br> * paragraph [0026] * <br> * paragraph [0067] * <br> * paragraph [0084] * <br> * paragraphs [0124] - [0137] * <br> * claims 2,9 * <br> * figures 5,6,9,11 * <br> ----- | 7,10 | TECHNICAL FIELDS SEARCHED (Int.Cl.7) <br><br> H04N |
| Y | US 5 666 161 A (KOHIYAMA TOMOHISA ET AL) 9 September 1997 (1997-09-09) <br> * column 1, line 8 - line 12 * <br> * column 2, line 40 - line 49 * <br> * column 14, line 1 - column 15, line 23 * <br> * column 16, line 53 - column 17, line 8 * <br> * column 18, line 21 - line 26 * <br> * column 20, line 1 - line 13 * <br> * figures 7,9,11,12A-E,16A-I * <br> ----- | 1-6,8,9 | |

-/--

The present search report has been drawn up for all claims

| Place of search | Date of completion of the search | Examiner |
|---|---|---|
| Berlin | 28 June 2004 | Sampels, M |

EPO FORM 1503 03.82 (P04C01)

**European Patent Office**

**EUROPEAN SEARCH REPORT**

Application Number

EP 04 09 0007

## DOCUMENTS CONSIDERED TO BE RELEVANT

| Category | Citation of document with indication, where appropriate, of relevant passages | Relevant to claim | CLASSIFICATION OF THE APPLICATION (Int.Cl.7) |
|---|---|---|---|
| Y | US 5 778 143 A (BOYCE JILL MACDONALD) 7 July 1998 (1998-07-07) * abstract * * column 3, line 65 - column 4, line 24 * * column 8, line 1 - line 40 * * figure 1 * ----- | 1-6,8,9 | |
| A | EP 0 627 858 A (MATSUSHITA ELECTRIC IND CO LTD) 7 December 1994 (1994-12-07) * abstract * * column 9, line 7 - column 10, line 33 * * figures 2,5 * ----- | 1-3,5,6, 8,9 | |
| A | EP 0 823 822 A (MITSUBISHI ELECTRIC CORP) 11 February 1998 (1998-02-11) * page 3, line 22 - line 30 * * page 3, line 53 - page 4, line 2 * * page 11, line 23 - page 12, line 55 * * figures 3,7 * ----- | 1-3,5,6, 8,9 | |

TECHNICAL FIELDS SEARCHED (Int.Cl.7)

The present search report has been drawn up for all claims

| Place of search | Date of completion of the search | Examiner |
|---|---|---|
| Berlin | 28 June 2004 | Sampels, M |

EPO FORM 1503 03.82 (P04C01)

**ANNEX TO THE EUROPEAN SEARCH REPORT
ON EUROPEAN PATENT APPLICATION NO.**

EP 04 09 0007

This annex lists the patent family members relating to the patent documents cited in the above-mentioned European search report.
The members are as contained in the European Patent Office EDP file on
The European Patent Office is in no way liable for these particulars which are merely given for the purpose of information.

28-06-2004

| Patent document cited in search report | | Publication date | Patent family member(s) | | Publication date |
|---|---|---|---|---|---|
| US 5717816 | A | 10-02-1998 | US | 5805762 A | 08-09-1998 |
| | | | US | 6023553 A | 08-02-2000 |
| | | | US | 6262770 B1 | 17-07-2001 |
| | | | US | 5778143 A | 07-07-1998 |
| | | | US | 5887115 A | 23-03-1999 |
| | | | US | 5729648 A | 17-03-1998 |
| | | | US | 5726711 A | 10-03-1998 |
| | | | US | 5673358 A | 30-09-1997 |
| | | | US | 5923814 A | 13-07-1999 |
| WO 9817065 | A | 23-04-1998 | US | 6366614 B1 | 02-04-2002 |
| | | | AU | 735938 B2 | 19-07-2001 |
| | | | AU | 4821997 A | 11-05-1998 |
| | | | BR | 9714301 A | 25-04-2000 |
| | | | CA | 2268408 A1 | 23-04-1998 |
| | | | CN | 1251725 A | 26-04-2000 |
| | | | EP | 0931417 A1 | 28-07-1999 |
| | | | ID | 28372 A | 17-05-2001 |
| | | | JP | 2001524270 T | 27-11-2001 |
| | | | KR | 2000049059 A | 25-07-2000 |
| | | | RU | 2217880 C2 | 27-11-2003 |
| | | | WO | 9817065 A1 | 23-04-1998 |
| | | | US | 2002021754 A1 | 21-02-2002 |
| EP 0944261 | A | 22-09-1999 | CN | 1233134 A | 27-10-1999 |
| | | | EP | 0944261 A2 | 22-09-1999 |
| | | | JP | 11331846 A | 30-11-1999 |
| | | | US | 6483947 B1 | 19-11-2002 |
| US 5666161 | A | 09-09-1997 | JP | 6309376 A | 04-11-1994 |
| | | | JP | 7075092 A | 17-03-1995 |
| US 5778143 | A | 07-07-1998 | US | 5623344 A | 22-04-1997 |
| | | | US | 5805762 A | 08-09-1998 |
| | | | US | 5377051 A | 27-12-1994 |
| | | | US | 5726711 A | 10-03-1998 |
| | | | US | 5583650 A | 10-12-1996 |
| | | | US | 5687275 A | 11-11-1997 |
| | | | US | 5729649 A | 17-03-1998 |
| | | | US | 6262770 B1 | 17-07-2001 |
| | | | US | 5717816 A | 10-02-1998 |
| | | | US | 5887115 A | 23-03-1999 |
| | | | US | 5729648 A | 17-03-1998 |
| | | | US | 5673358 A | 30-09-1997 |
| | | | US | 6023553 A | 08-02-2000 |
| | | | US | 5923814 A | 13-07-1999 |

EPO FORM P0459

For more details about this annex : see Official Journal of the European Patent Office, No. 12/82

**ANNEX TO THE EUROPEAN SEARCH REPORT
ON EUROPEAN PATENT APPLICATION NO.**

EP 04 09 0007

This annex lists the patent family members relating to the patent documents cited in the above-mentioned European search report.
The members are as contained in the European Patent Office EDP file on
The European Patent Office is in no way liable for these particulars which are merely given for the purpose of information.

28-06-2004

| Patent document cited in search report | | Publication date | Patent family member(s) | | Publication date |
|---|---|---|---|---|---|
| US 5778143 | A | | US 5576902 A | | 19-11-1996 |
| EP 0627858 | A | 07-12-1994 | JP 3085024 B2 | | 04-09-2000 |
| | | | JP 6343156 A | | 13-12-1994 |
| | | | DE 69415585 D1 | | 11-02-1999 |
| | | | DE 69415585 T2 | | 17-06-1999 |
| | | | EP 0627858 A2 | | 07-12-1994 |
| | | | US 5570197 A | | 29-10-1996 |
| | | | US 5657416 A | | 12-08-1997 |
| EP 0823822 | A | 11-02-1998 | JP 10051766 A | | 20-02-1998 |
| | | | AU 692408 B2 | | 04-06-1998 |
| | | | AU 1471897 A | | 12-02-1998 |
| | | | CA 2197820 A1 | | 06-02-1998 |
| | | | CN 1347063 A | | 01-05-2002 |
| | | | CN 1172998 A | | 11-02-1998 |
| | | | EP 0823822 A2 | | 11-02-1998 |
| | | | US 2003133510 A1 | | 17-07-2003 |
| | | | US 6442207 B1 | | 27-08-2002 |
| | | | US 6222887 B1 | | 24-04-2001 |
| | | | US 6246438 B1 | | 12-06-2001 |

EPO FORM P0459

For more details about this annex : see Official Journal of the European Patent Office, No. 12/82